(19) **Europäisches Patentamt / European Patent Office / Office européen des brevets**

(11) **EP 3 843 262 B1**

(12) **EUROPEAN PATENT SPECIFICATION**

(45) Date of publication and mention of the grant of the patent:
**27.08.2025 Bulletin 2025/35**

(21) Application number: **19851795.5**

(22) Date of filing: **07.08.2019**

(51) International Patent Classification (IPC):
*H02P 6/34* (2016.01)        *G05B 13/02* (2006.01)
*G05B 11/42* (2006.01)        *G05B 19/19* (2006.01)

(52) Cooperative Patent Classification (CPC):
**H02P 6/34; G05B 11/42;** G05B 19/19;
G05B 2219/42267

(86) International application number:
**PCT/JP2019/031192**

(87) International publication number:
**WO 2020/039935 (27.02.2020 Gazette 2020/09)**

(54) **SETTING ASSISTANCE DEVICE**

EINSTELLUNGSASSISTENZVORRICHTUNG

DISPOSITIF D'AIDE AU RÉGLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2018 JP 2018155020**

(43) Date of publication of application:
**30.06.2021 Bulletin 2021/26**

(73) Proprietor: **OMRON CORPORATION**
**Kyoto-shi, Kyoto 600-8530 (JP)**

(72) Inventor: **EGI, Mamoru**
**Kizugawa-shi, Kyoto 619-0283 (JP)**

(74) Representative: **Becker, Eberhard**
**Becker Kurig & Partner**
**Patentanwälte mbB**
**Bavariastraße 7**
**80336 München (DE)**

(56) References cited:
JP-A- 2007 034 781        JP-A- 2007 034 781
JP-A- 2009 116 515        JP-A- 2009 122 779
JP-A- 2009 124 803        JP-A- 2017 167 607
JP-A- 2017 167 607

**Description**

[Technical Field]

The present invention relates to a setting assistance device for assisting setting of parameter values in a motor control device.

[Background Art]

Various techniques for assisting setting of parameter values in a motor control device are known. For example, Patent Literature 1 describes a technique of searching for a gain that is sufficient for control performance through trial and error while gradually increasing the gain. According to the technique, a user with less expert knowledge regarding gain adjustment can adjust the gain such that it becomes sufficient for the control performance. However, since only the control performance is evaluated, the technique described in Patent Literature 1 has problems that stability may not be able to be secured and that it takes a long time to perform the adjustment due to the high number of times trial and error need to be conducted. Also, Patent Literature 1 describes a technique according to which gain adjustment can be performed while a trade-off with respect to various evaluation indexes is maintained. According to the technique, it is possible to adjust the gain in consideration of stability. However, according to the technique described in Patent Literature 1, the user is in charge of determination of what values are to be defined as various parameter values. Therefore, it may not be possible to satisfactorily perform the gain adjustment with the technique in a case in which the user has insufficient knowledge regarding gain adjustment.

JP 2007 034781 A discloses a method of adjusting a control parameter for a positioning controller. The method adjusts the control parameter for the positioning controller positioning a control target to a target position, and includes steps: changing the control parameter at a prescribed stepping width, calculating an evaluation value showing responsiveness of the positioning controller every time the change is generated; determining the optimum control parameter on the basis of each the evaluation value; and setting the optimum control parameter to the positioning controller.

Citation List

Patent Literature

Patent Literature 1: Japanese Patent Laid-Open No. 2011-244668
Patent Literature 2: Japanese Patent Laid-Open No. 2017-167607

[Summary of Invention]

Technical Problem

The present invention is provided by the appended claims. The following disclosure serves a better understanding of the present invention. Accordingly, the invention was made in view of the aforementioned problem, and an objective thereof is to provide a setting assistance device that enables even a user having insufficient knowledge regarding gain adjustment to set, in a motor control device, parameter values that can provide sufficient stability and control performance to the motor control device.

Solution to Problem

In order to achieve the aforementioned objective, a setting assistance device according to the present invention is a setting assistance device that assists setting of parameter values in a motor control device that controls a motor, the setting assistance device including: an index value calculation unit that is configured to calculate a first evaluation index value which indicates control performance or stability of motor control performed by the motor control device in each of a plurality of conditions in which a combination of values of a first parameter and a second parameter that are set in the motor control device is different, wherein two of a velocity proportional gain, an integral gain and a position proportional gain are used as the first parameter and the second parameter; a recommended value calculation unit that is configured to calculate, on the basis of the first evaluation index value and a second evaluation index value in each condition calculated by the index value calculation unit, a recommended value for the first parameter and a recommended value for the second parameter; and a recommended value output unit that is configured to output the recommended value for the first parameter and the recommended value for the second parameter calculated by the recommended value calculation unit to set, in the motor control device, the parameter values that can provide sufficient stability and control performance to the motor control device. The index value calculation unit is configured to calculate the second evaluation index value of the motor control performed by the motor control device in each of the plurality of conditions. The index value calculation unit is configured to calculate, as the second evaluation index value in each condition, a value with a positive or negative correlation with each of the values of the first parameter and the second parameter in each condition.

In other words, the setting assistance device has a configuration of determining (calculating) the recommended values for the two parameters. The setting assistance device thus enables a user having insufficient knowledge regarding gain adjustment to set, in a motor control device, parameter values that can provide sufficient stability and control performance to the motor control device. Note that the recommended value output unit of the setting assistance device may display (output) the recommended value for each parameter on a display or may output the recommended value for each parameter as a setting value for each parameter to the motor control device.

Note that as a procedure for calculating the two recommended values from the first evaluation index value in each condition that is performed by the recommended value calculation unit, various procedures can be employed. For example, the recommended value calculation unit may calculate, as the recommended value for each parameter, the values of the first and second parameters in a condition in which the first evaluation index value that is the closest to a desired value can be obtained. Also, in a case in which a plurality of sets of such values of first and second parameters are present, one set of parameter values to be defined as the recommended values may be selected from the plurality of sets of parameter values on the basis of the value of the first parameter and/or the value of the second parameter, or one set of parameter values to be defined as the recommended values may be selected using another algorithm (in a random manner, for example).

The index value calculation unit may calculate, as the first evaluation index value, a value indicating stability of the motor control performed by the motor control device. Moreover, the index value calculation unit may calculate, as the second evaluation index value, a value indicating control performance of the motor control performed by the motor control device.

The recommended value calculation unit may specify a condition, which satisfies a requirement specification for the stability and a requirement specification for the control performance, and under which lowest performance is able to be realized, on the basis of the first evaluation index value and the second evaluation index value in each condition, and calculate the values of the first parameter and the second parameter for the specified condition as the recommended value for the first parameter and the recommended value for the second parameter.

The setting assistance device may employ a configuration in which "the index value calculation unit also calculates a third evaluation index value that is an evaluation result obtained using an evaluation criterion different from an evaluation criterion of the first evaluation index value for stability of motor control performed by the motor control device in each of the plurality of conditions, and the recommended value calculation unit may also use the third evaluation index value in each condition calculated by the index value calculation unit to calculate the recommended value for the first parameter and the recommended value for the second parameter."

In a case in which the motor control device includes a notch filter or a torque filter, the index value calculation unit may calculate, as the first evaluation index value or the third evaluation index value, a gain at a frequency in accordance with a center frequency of the notch filter or a cutoff frequency of the torque filter of a servo system including the motor control device.

Also, in a case in which the motor control device includes a notch filter or a torque filter, the setting assistance device may additionally include: a filter parameter recommended value output unit that respectively calculates, on the basis of a plurality of pieces of parameter setting information that designate values of one or more parameters that define a frequency property of the notch filter or the torque filter, the first evaluation index value in each of the plurality of conditions in a case in which the value designated by the parameter setting information is set as the values of the one or more parameters of the notch filter or the torque filter for each of the plurality of pieces of parameter setting information, determines whether or not each condition satisfies a requirement specification for the stability on the basis of the calculated first evaluation index value in each condition, and outputs, as recommended values for the one or more parameters of the notch filter or the torque filter, the values of the one or more parameters designated by the parameter setting information with a broadest range of the conditions under which the requirement specification for the stability is satisfied.

The setting assistance device may additionally include: a user interface unit that changes the plurality of pieces parameter setting information that are targets of a process performed by the filter parameter recommended value output unit in response to an instruction from a user.

In a case in which the motor control device includes a notch filter, the setting assistance device may additionally include: a recommended value determination unit that determines recommended values for one or more parameters that define a frequency property of the notch filter from a measurement result of a gain property of the motor control performed by the motor control device.

The index value calculation unit may obtain a frequency transfer function of a predetermined portion including the motor from a measurement result of a gain property of the motor control performed by the motor control device and calculate the first evaluation index value in each of the plurality of conditions using the obtained frequency transfer function. Further, the index value calculation unit may calculate the second evaluation index value in each of the plurality of conditions using the frequency transfer function.

The index value calculation unit may calculate the second evaluation index value in each of the plurality of conditions from the frequency transfer function without performing an integration operation such as a convolution operation. Also, the index value calculation unit may have a function of determining a value of at least one parameter other than the first parameter and the second parameter in each condition from the value of the first parameter or the second parameter.

A setting assistance device according to an aspect of the present invention is a setting assistance device that assists setting of parameter values in a plurality of motor control devices used to synchronously control a motor with two or more axes, the setting assistance device including: first evaluation index value calculation means for calculating a first evaluation index value that indicates stability of motor control performed by the motor control device in each of a plurality of conditions in which a combination of values of a first parameter and a second parameter that are set in the motor control device is different, for each motor control device that is an assistance target of setting of parameter values; specifying means for specifying a worst value of the first evaluation index value calculated by the first evaluation index value calculation means for each condition; recommended value calculation means for calculating, on the basis of the worst value specified in each condition by the specifying means, a recommended value for the first parameter and a recommended value for the second parameter; and recommended value output means for determining and outputting the recommended value for the first parameter and recommended value for the second parameter on the basis of the worst value in each condition specified by the specifying means.

The setting assistance device (hereinafter, also referred to as a second setting assistance device) enables even a user having insufficient knowledge regarding gain adjustment to set, in the plurality of motor control devices used to synchronously control the motor with two or more axes, parameter values that can provide sufficient stability and control performance to each motor control device.

As a procedure for calculating the two recommended values from the worst value in each condition performed by the recommended value calculation means in the second setting assistance device, various procedures can be employed. For example, the recommended value calculation means may calculate, as the recommended value for each parameter, the values of the first and second parameters in a condition in which a worst value that is closest to a desired value can be obtained. Also, in a case in which a plurality of sets of such values of first and second parameters are present, one set of parameter values to be defined as the recommended values may be selected from the plurality of sets of parameter values, or one set of parameter values to be defined as the recommended values may be selected using another algorithm (in a random manner, for example).

Also, the second setting assistance device may employ a configuration in which "the recommended value calculation means determines whether or not each of the conditions satisfies a requirement specification for the stability on the basis of a result of specifying the worst value in each condition, calculates a second evaluation index value of the motor control performed by the motor control device in a trade-off relationship with the first evaluation index value in each condition that is determined to satisfy the requirement specification, and calculates the recommended value for the first parameter and the recommended value for the second parameter on the basis of the calculated second evaluation index value in each condition."

Advantageous Effects of Invention

According to the present invention, it is possible to provide a setting assistance device that enables even a user having insufficient knowledge regarding gain adjustment to set, in a motor control device, parameter values that can provide sufficient stability and control performance to the motor control device.

[Brief Description of Drawings]

Fig. 1 is an explanatory diagram of a utilization form example of a setting assistance device 10 according to an embodiment of the present invention.
Fig. 2 is a block diagram for explaining parameters for a motor control device.
Fig. 3 is a functional block diagram of the setting assistance device 10.
Fig. 4 is an explanatory diagram of a closed-loop gain peak amount and a resonant peak margin.
Fig. 5 is an explanatory diagram of a stability map.
Fig. 6 is an explanatory diagram of the stability map.

Fig. 7 is a flow diagram of a stability index value calculation process.

Fig. 8 is an explanatory diagram of a position closed-loop property Gp_closed, a position opened-loop property Gp_open, a velocity closed-loop property Gv_closed, and a velocity opened-loop property Gv_open.

Fig. 9 is a flow diagram of a second notch filter parameter calculation process.

Fig. 10 is an explanatory diagram of an optimization level setting item.

Fig. 11 is an explanatory diagram of effects of the second notch filter parameter calculation process.

Fig. 12 is an explanatory diagram of effects of the second notch filter parameter calculation process.

Fig. 13 is a flow diagram of a third notch filter parameter calculation process.

Fig. 14 is a diagram for explaining details of the third notch filter parameter calculation process.

Fig. 15 is an explanatory diagram of a system example in which a plurality of shafts are caused to operate in a coordinated manner.

Fig. 16 is an explanatory diagram of a phenomenon that may occur in a system as illustrated in Fig. 15.

Fig. 17 is a diagram for explaining details of a multi-axial parameter value setting assistance process.

[Description of Embodiments]

Hereinafter, an embodiment of the present invention will be described on the basis of drawings.

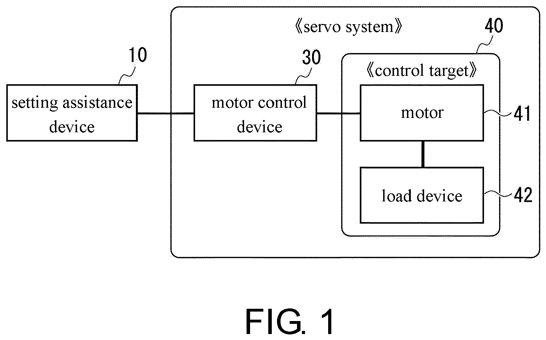

Fig. 1 illustrates a utilization form example of a setting assistance device 10 according to an embodiment of the present invention.

The setting assistance device 10 according to the present embodiment is a device used with connection to one or more (one in Fig. 1) motor control devices 30 to assist setting of parameter values in the motor control devices 30.

Each motor control device 30 is a device that controls a motor 41 connected to a load device 42 in response to a command (a position command, a torque command, or a velocity command) input from a higher-order device (not illustrated) such as a programmable logic controller (PLC). Hereinafter, a portion configured of the motor 41 and the load device 42 will be referred to as a control target 40, and a portion configured of the motor control device 30 and the control target 40 will be referred to as a servo system.

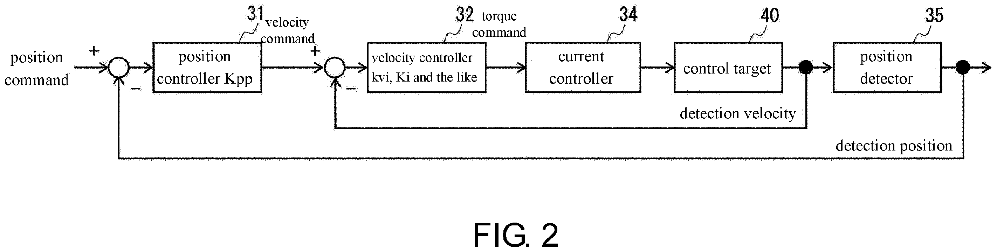

In a case in which a position command is input from the higher-order device, the motor control device 30 operates as a position controller 31, a velocity controller 32, a current controller 34, a position detector 35, or the like as illustrated in Fig. 2.

The position detector 35 is a unit that outputs the position of the control target 40 (hereinafter, a detection position) by integrating the velocity of the control target 40 (hereinafter, a detection velocity) detected by an encoder (not illustrated) attached to the motor 41 or the load device 42.

The position controller 31 is a unit that has a position proportional gain Kpp as a parameter. As illustrated in the drawing, a position deviation that is a deviation between the position command and the detection position is input to the position controller 31. Also, the position controller 31 calculates and outputs a velocity command that is a value obtained by multiplying the position deviation by the position proportional gain Kpp.

The velocity controller 32 is a unit that performs PI control using a velocity deviation that is a deviation between a velocity command and a detection velocity as the amount of operation and using a torque command as the amount of control. The velocity controller 32 has a velocity proportional gain Kvp and an integral gain Ki as parameters.

Also, the velocity controller 32 includes a torque filter (low pass filter) and a notch filter for which ON/OFF (whether or not to cause the torque filter and the notch filter to function) can be set. The torque filter in the velocity controller 32 has a cutoff frequency as a parameter, and the notch filter in the velocity controller 32 has a center frequency, a notch depth, and a Q value (= center frequency/notch width) as parameters.

The current controller 34 is a unit that generates a drive current in accordance with a torque command from the velocity controller 32 and supplies the drive current to the motor.

On the assumption of the above description, a configuration and operations of the setting assistance device 10 will specifically be described below.

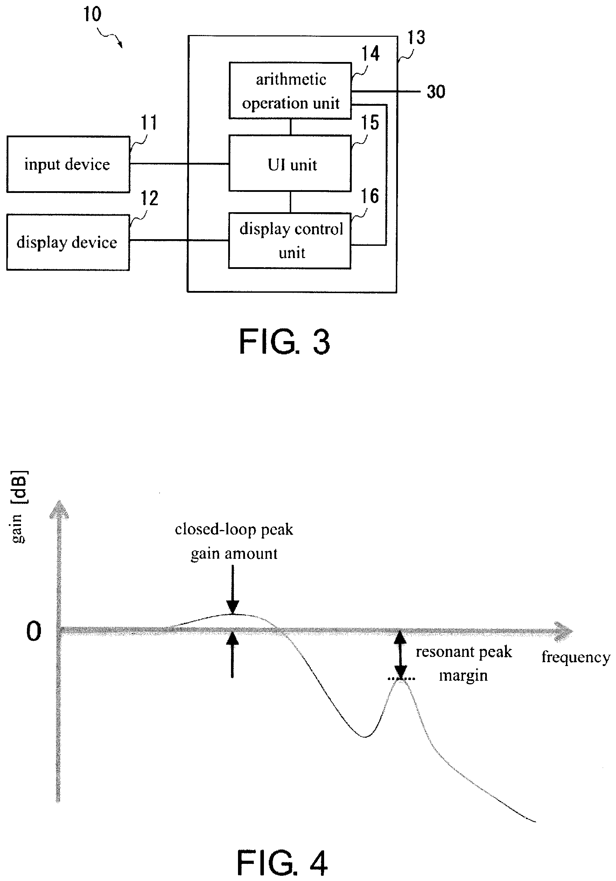

Fig. 3 illustrates a functional block diagram of the setting assistance device 10. The setting assistance device 10 according to the present embodiment is a device that is a personal computer (PC) with a setting assistance program installed therein. As illustrated in Fig. 3, the setting assistance program installed in the PC causes a main body portion (a portion configured of a CPU and peripheral devices thereof) 13 of the PC to function as an arithmetic operation unit 14, a UI unit 15, and a display control unit 16.

The display control unit 16 is a functional block that displays an image of content designated through an instruction from the arithmetic operation unit 14 or the UI unit 15 on a screen of the display device 12.

The arithmetic operation unit 14 is a functional block capable of executing a notch filter parameter calculation process, a recommended value calculation process, a display/setting process, a setting/display process, and the like.

The notch filter parameter calculation process is a process of calculating a recommended value for each parameter of the notch filter in the velocity controller 32 and setting the recommended value in the motor control device 30.

The notch filter parameter calculation process includes first to third notch filter parameter calculation processes.

The recommended value calculation process is a process configured of a stability index value calculation process and a control performance index value/recommended value calculation process.

The stability index value calculation process is a process of calculating a stability index value indicating stability of motor control performed by the motor control device in each of a plurality of conditions in which a combination of values of the first parameter and the second parameter that are set in the motor control device 30 is different. The stability index value calculation process is a process in which the user can designate which of the first and second parameters is to be used as a parameter and is a process in which one or more values from among a gain margin, a phase margin, a closed-loop gain peak amount, and a resonant peak margin are specified as a stability index value to be calculated. Note that the closed-loop gain peak amount and the resonant peak margin are a peak value of the gain property on a low-frequency side and a gain margin of a resonant frequency, respectively, as schematically illustrated in Fig. 4.

Also, the stability index value calculation process is a process in which it is possible to designate whether the value of each parameter other than the first and second parameters is to be a fixed value (a value designated by the user) or a value in accordance with the value of the first or second parameter. Further, the stability index value calculation process is a process in which it is also possible to designate that one of the values of the first and second parameters is a fixed value (a value designated by the user).

The control performance index value/recommended value calculation process is a process in which a control performance index value indicating control performance of motor control performed by the motor control device 30 in each condition in which at least the stability index value calculated in the stability index value calculation process satisfies a stability requirement specification is calculated, and on the basis of the calculation result, values of the first and second parameters that satisfy the stability requirement specification and the control performance requirement specification are calculated as recommended values for the parameters. The control performance index value/recommended value calculation process is a process in which it is possible to designate, as the control performance index value to be calculated, one or more values from among a trajectory following delay time, a steady-state deviation, a settling time, a trajectory following performance replacing property value, a steady-state deviation replacing property value, a settling time replacing property value, and a lamp response followability replacing property value.

Here, the stability requirement specification is information that defines requirements that are to be determined to satisfy the stability demand with one or more stability index values that are calculation targets (for example, "the closed-loop gain peak amount is to be equal to or less than 1 dB", "the closed-loop gain peak amount is to be equal to or less than 1 dB and the resonant peak margin (the gain margin at the resonant frequency) is equal to or greater than 5 dB"). Also, the control performance requirement specification is information that defines requirements that are to be determined to satisfy a control performance demand with the control performance index values. The control performance requirement specification is information set for (separately) each control performance index value, and recommended values are **calculated** for each control performance requirement specification in the control performance index value/recommended value calculation process.

The display/setting process is a process of displaying, on the screen of the display device 12, each recommended value calculated in the control performance index value/recommended value calculation process together with the stability index value in each condition as results of the process and setting each calculated recommended value in the motor control device 30 when a checking operation is performed by the user. The setting/display process is a process of setting each recommended value calculated in the control performance index value/recommended value calculation process in the motor control device 30 and displaying, on the screen of the display device 12, each recommended value together with the stability index value in each condition as results of the process.

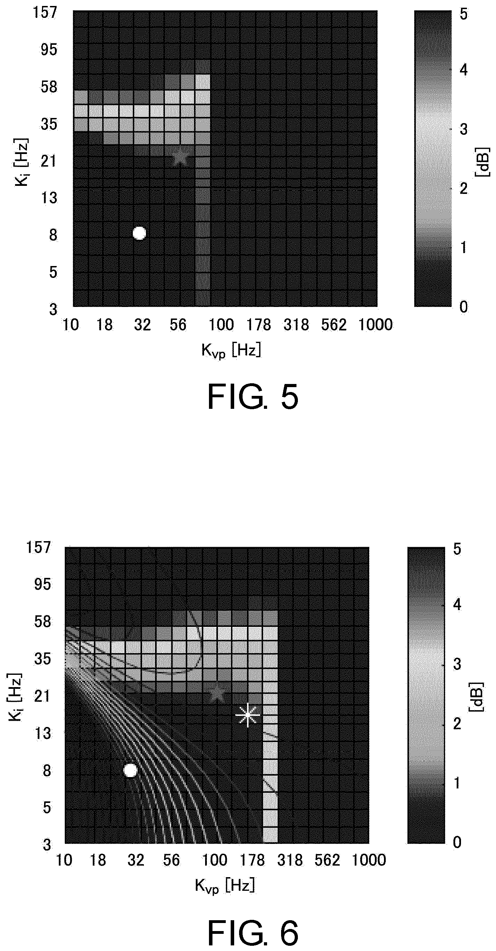

Fig. 5 illustrates an example of an image (hereinafter, referred to as a stability map) displayed as the results of the process on the screen of the display device 12 through the display/setting process or the setting/display process. As illustrated in the drawing, the stability map is basically a contour map, in which the stability index value is indicated with a color for each combination of the value of the first parameter (the velocity proportional gain Kvp in the drawing) and the value of the second parameter (the integral gain Ki in the drawing), on which figures (☆) indicating the recommended values are illustrated. Note that ○ illustrated in the stability map are figures indicating setting values of the first and second parameters when the position closed-loop property Gp_closed, which will be described later, is measured.

However, in a case in which the user has designated a plurality of control performance requirement specifications, an image with the recommended values indicated on the contour map for each of the control performance requirement specifications is displayed as the stability map. Further, in a case in which the user designates display of an contour line regarding a certain control performance index value, an contour line connecting points of the same control performance evaluation value is displayed on the contour map with control performance evaluation values displayed with colors, as illustrated in Fig. 6.

The UI unit 15 (Fig. 3) is a functional block for allowing the user to designate details of a process that the arithmetic operation unit 14 is caused to execute through an operation of the input device 11 such as a mouse and a keyboard and causing the arithmetic operation unit 14 to execute a process of the details designated by the user.

The UI unit 15 is configured to allow the user to cause the arithmetic operation unit 14 to execute a series of processes as illustrated in the examples below.

-Process Example 1

The notch filter parameter calculation process (any of the first to third notch filter parameter calculation processes) is executed;

a recommended value calculation process using Kvp and Ki as the first parameter and the second parameter, respectively, using the closed-loop gain peak amount as the stability index value, and using the steady-state deviation replacing property value as the stability index value is executed; and
the setting/display process (or the display/setting process) is executed.

-Process Example 2

The notch filter parameter calculation process is executed;

the recommended value calculation process using Kvp and Ki as the first parameter and the second parameter, respectively, using the closed-loop gain peak amount as the stability index value, and using the steady-state deviation replacing property value as the stability index value is executed;
the recommended value calculation process of using Kpp and Ki as the first parameter and the second parameter, respectively, which is the recommended value calculation process in which Ki is fixed to the recommended value obtained in the recommended value calculation process that has been completed, is executed; and
the setting/display process (or the display/setting process) is executed.

-Process Example 3

The notch filter parameter calculation process is executed;

the recommended value calculation process using Kvp and Kpp as the first parameter and the second parameter, respectively, using Kvp·4 as Ki, using the closed-loop gain peak amount as the stability index value, and using the steady-state deviation replacing property value as the stability index value is executed; and
the setting/display process (or the display/setting process) is executed.

Hereinafter, various processes that the arithmetic operation unit 14 can execute will further specifically be described. Note that although the notch filter parameter calculation process is typically executed first when the setting assistance device 10 is used, the notch filter parameter calculation process will be described below after the recommended value calculation process (the stability index value calculation process and thee control performance index value calculation process) is described, for convenience of explanation.

<<Stability index value calculation process>>

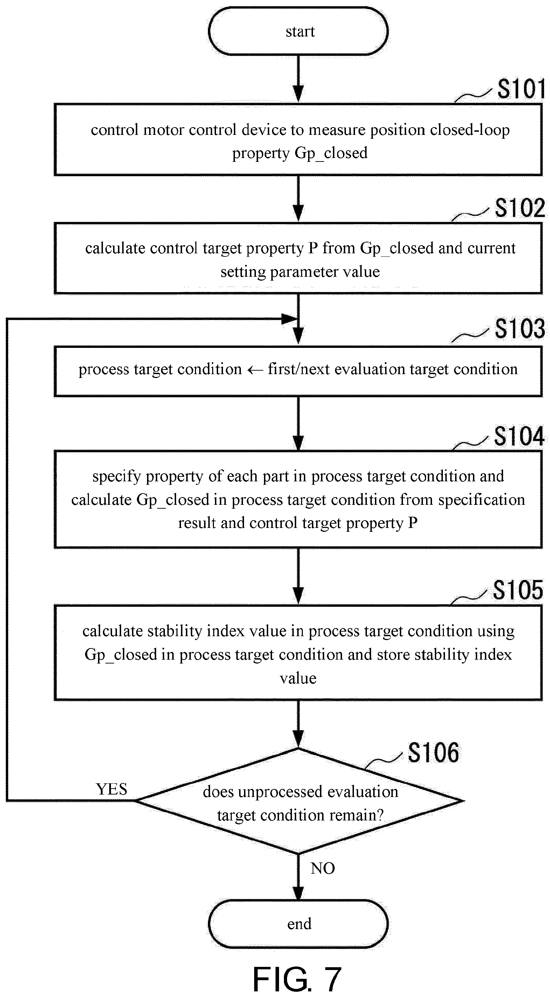

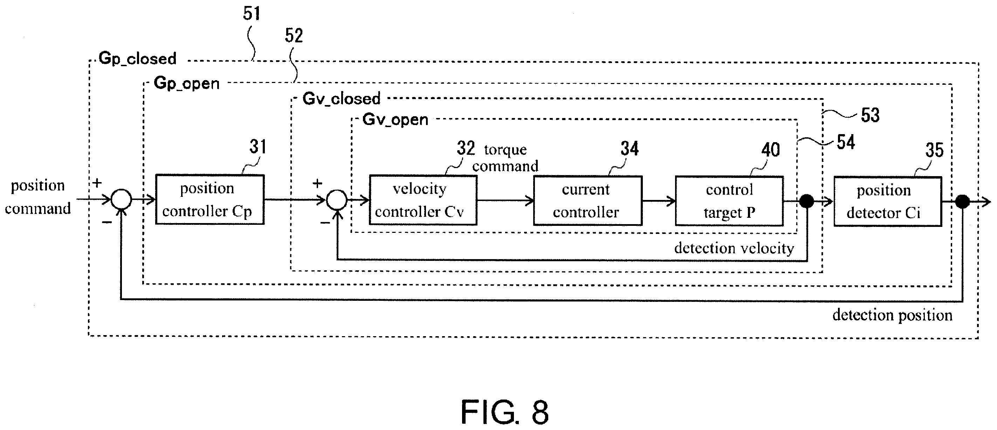

Fig. 7 illustrates a flow diagram of the stability index value calculation process. In the flow diagram and the following description, the position closed-loop property Gp_closed, the position opened-loop property Gp_open, the velocity closed-loop property Gv_closed, and the velocity opened-loop property Gv_open denote frequency transfer functions of the portions of the servo system indicated in the dotted line frames 51 to 54 in Fig. 8, respectively.

As illustrated in Fig. 7, the arithmetic operation unit 14 performs a process of controlling the motor control device 30, thereby measuring the position closed-loop property Gp_closed (complex array) (Step S101) first, at the time of the stability index value calculation process. The process in this step may be "a process of calculating the position closed-loop property Gp_closed by periodically collecting a detection position while inputting a position command that temporally changes so as to include multiple frequency components to the motor control device 30 and obtaining a ratio through Fourier conversion of the input position command and the collected detection positions" or may be "a process of requesting measurement of the position closed-loop property Gp_closed from the motor control device 30 and acquiring a measurement result from the motor control device 30."

The arithmetic operation unit 14 that has ended the process in Step S101 calculates a control target property P (a frequency transfer function P of the control target 40) from the measured position closed-loop property Gp_closed and various parameter values set in each part of the motor control device 30 at that timing (Step S102).

More specifically, the arithmetic operation unit 14 specifies a property (frequency transfer function; the same applies to the following description) Cp of the position controller 31 and a property Cv of the velocity controller 32 from setting values of various parameters (Kpp, Kvp, Ki, and the filter parameter) at that timing (at the timing of the measurement of Gv_closed) first, in Step S102.

Then, the arithmetic operation unit 14 calculates the control target property P by successively performing the following arithmetic operations on the basis of the specified properties Cp, Cv, and the like. Note that Ci in Equation (2) below denotes the property (frequency transfer function) of the position detector 35.

$$\text{Gp\_open} = \text{Gp\_closed}/(1 - \text{Gp\_closed})\ldots(1)$$

$$\text{Gv\_closed} = \text{Gp\_open}/(\text{Cp}\cdot\text{Ci})\ldots(2)$$

$$\text{Gv\_open} = \text{Gv\_closed}/(1 - \text{Gv\_closed})\ldots(3)$$

$$P = \text{Gv\_open}/\text{Cv}\ldots(4)$$

In other words, the arithmetic operation unit 14 obtains the position opened-loop property Gp_open from the position closed-loop property Gp_closed first (Equation (1)). Then, the arithmetic operation unit 14 obtains the velocity closed-loop property Gv_closed by dividing the position opened-loop property Gp_open by the property Cp and the property Ci (Equation (2)). Further, the arithmetic operation unit 14 obtains the velocity opened-loop property Gv_open from the velocity closed-loop property Gv_closed (Equation (3)). Then, the arithmetic operation unit 14 calculates the control target property P by dividing the velocity opened-loop property Gv_open by Cv (Equation (4)).

The arithmetic operation unit 14 that has ended the process in Step S102 starts a process loop in Steps S103 to S106 and stores that a process target condition is the first evaluation target condition among a plurality of evaluation target conditions first (Step S103). Here, the plurality of evaluation target conditions mean conditions in which combinations of values of two parameters (Ki and Kvp, Kpp and Kvp, or the like) designated by the user as setting target parameters are different from each other. Note that the arithmetic operation unit 14 automatically determines the number of evaluation target conditions and specific content of each evaluation target condition in accordance with the combination of the two setting target parameters. At this time, the arithmetic operation unit 14 defines each parameter value other than the setting target parameters in each evaluation target condition as a fixed value (a value designated by the user) or a value obtained from the first or second parameter in accordance with designation of the user.

The arithmetic operation unit 14 that has ended the process in Step S103 specifies a property of each part (the property Cp of the position controller 31 and the property Cv of the velocity controller 32) in the process target condition (Step S104). Then, the arithmetic operation unit 14 calculates Gp_closed in the process target condition from the specified property of each part and the control target property P (Step S104). The process in Step 104 is a process of calculating Gp_closed by performing the following arithmetic operations in order (see Fig. 8).

$$\text{Gv\_open} = \text{Cv}\cdot\text{P}$$

$$\text{Gv\_closed} = (\text{Gv\_open})/(1 + \text{Gv\_open})$$

$$\text{Gp\_open} = \text{Cp}\cdot\text{Ci}\cdot\text{Gv\_closed}$$

$$\text{Gp\_closed} = \text{Gp\_open}/(1 + \text{Gp\_open})$$

The arithmetic operation unit that has ended the calculation of Gp_closed in the process target condition calculates and stores stability index values (for example, only the gain margin, or the closed-loop gain peak amount and the resonant peak margin), the number and types of which are designated by the user, using that Gp_closed (Step S105).

The arithmetic operation unit 14 that has ended the process in Step S105 determines whether or not any unprocessed sets of evaluation target conditions remain (Step S106). In a case in which unprocessed sets of evaluation target conditions remain (Step S106; YES), the arithmetic operation unit 14 returns to Step S103 to execute the process in the next evaluation target condition.

Then, the arithmetic operation unit 14 ends the stability index value calculation process when the process is completed in all evaluation target conditions (Step S106; NO).

<<Control performance index value/recommended value calculation process>>

The control performance index value/recommended value calculation process is a process of calculating two setting value target parameter values that satisfy the stability requirement specification and the control performance requirement specification and that lead to the worst control performance as recommended values for the two setting target parameters for each control performance requirement specification, on the basis of the process result of the stability index value calculation process (Fig. 7), the stability requirement specification, and one or more control performance requirement specifications. Note that the two setting target parameter values that lead to the worst control performance rather than two setting target parameter values that lead to the best control performance are calculated as the recommended values for the two setting target parameters because it is possible to maintain the state in which the stability requirement specification is satisfied even if stability is degraded due to a change of the control target 40 with time as long as stability is sufficiently secured.

As described above, the setting assistance device 10 is configured as a device that can designate one or more values among the trajectory following delay time, the steady-state deviation, the settling time, the trajectory following performance replacing property value, the steady-state deviation replacing property value, the settling time replacing property value, and the lamp response followability replacing property value, as the control performance index value used to determine the control performance.

During the control performance index value/recommended value calculation process, the arithmetic operation unit 14 calculates the trajectory following delay time, the steady-state deviation, and the settling time in each evaluation target condition by performing a convolution operation on the basis of Gv_close in each evaluation target condition obtained in the stability index value calculation process. Then, the arithmetic operation unit 14 calculates, as recommended values for the two setting target parameters, the two setting target parameter values that satisfy the stability requirement specification and the control performance requirement specification and that lead to the worst control performance, on the basis of the control performance index value (trajectory following delay time or the like) calculated in each evaluation target condition and the stability index value in each evaluation target condition calculated in the stability index value calculation process.

Also, during the recommended value calculation process, the arithmetic operation unit 14 calculates each of other control performance index values without performing the convolution operation.

Specifically, the arithmetic operation unit 14 calculates the following L value as the trajectory following performance replacing property value.

$$L = SQR \ (\text{first parameter value}^2 + \alpha \cdot \text{second parameter value}^2)$$

Note that $\alpha$ is a value (> 0) that is defined in advance in accordance with the combination of the first parameter and the second parameter.

Also, the arithmetic operation unit 14 calculates the first array value (the array value on the lowest frequency side) Gv_closed[1] and k-th array value Gv_closed[k] of Gv_closed in each evaluation target obtained in the stability index value calculation process, as the steady-state deviation replacing property value and the settling time replacing property value, respectively. Note that Gv_closed[k] means a frequency component corresponding to a reciprocal of a time designated by the user as a settling time replacing property value evaluation time.

Also, the arithmetic operation unit 14 calculates a value by further multiplying Gv_closed in each evaluation target condition by $1/(j\omega)$ ($\omega$ is a designated frequency) as the lamp response followability replacing property value.

Then, the arithmetic operation unit 14 calculates two setting target parameter values that satisfy the stability requirement specification and the control performance requirement specification and that lead to the worst control performance as recommended values for the two setting target parameters, on the basis of the control performance index value (replacing property value) calculated in each evaluation target condition and the stability index value in each evaluation target condition calculated in the stability index value calculation process.

Here, some supplementary matters regarding each of the aforementioned replacing property values will be described.

In a stable region with no gain peak in a Bode diagram, there is substantially a positive correlation between trajectory following performance and each gain value (the Kpp value, the Kvp value, or the Ki value). Therefore, it is possible to use the aforementioned L value as the trajectory following performance replacing property value. In addition, there are also substantially positive correlations between the steady-state deviation and Gv_closed[1], between the settling time and Gv_closed[k], and between the lamp response followability and Gv_closed/(j$\omega$). Therefore, it is possible to use each of the replacing property values of the steady-state deviation, the settling time lamp, and the response followability as the control performance index value.

In addition, since each of the aforementioned replacing property values is obtained through a simple arithmetic operation, it is possible to calculate the values in a shorter time than the trajectory following delay time or the like for which a convolution operation is needed. It is thus possible to obtain the recommended value for each setting target parameter in a significantly shorter time by designating that the aforementioned replacing property value is to be used to determine the control performance.

<<Notch filter parameter calculation process>>

As described above, the notch filter parameter calculation process includes the first to third notch filter parameter calculation processes. Hereinafter, details of the first to third notch filter parameter calculation processes will be described in order.

-First notch filter parameter calculation process

The arithmetic operation unit 14 to which an instruction for executing the first notch filter parameter calculation process has been provided calculates a recommended value for each parameter of the notch filter in the velocity controller 32 and sets the recommended value in the motor control device 30 in the following procedure.

The arithmetic operation unit 14 that has started the first notch filter parameter calculation process turns off the notch filter first. Then, the arithmetic operation unit 14 controls the motor control device 30 such that the position closed-loop property Gp_closed is measured. Here, the position closed-loop property Gp_closed means a frequency transfer function (complex array) of the servo system. The process of measuring Gp_closed may be "a process of calculating the position closed-loop property Gp_closed by periodically collecting the detection position while inputting the position command that temporally changes so as to include multiple frequency components to the motor control device 30 and obtaining a ratio through Fourier conversion between the input position command and the collected detection position" or may be "a process of requesting measurement of the position closed-loop property Gp_closed from the motor control device 30 and acquiring the measurement result from the motor control device 30."

Then, the arithmetic operation unit 14 determines the recommended value for each parameter (the center frequency $\omega n$, the notch depth d, or the notch width $\Delta\omega$) of the notch filter such that the resonant peak in measured Gp_closed is curbed, sets each of the determined recommended values in the motor control device 30, and then ends the first notch filter parameter calculation process.

-Second notch filter parameter calculation process

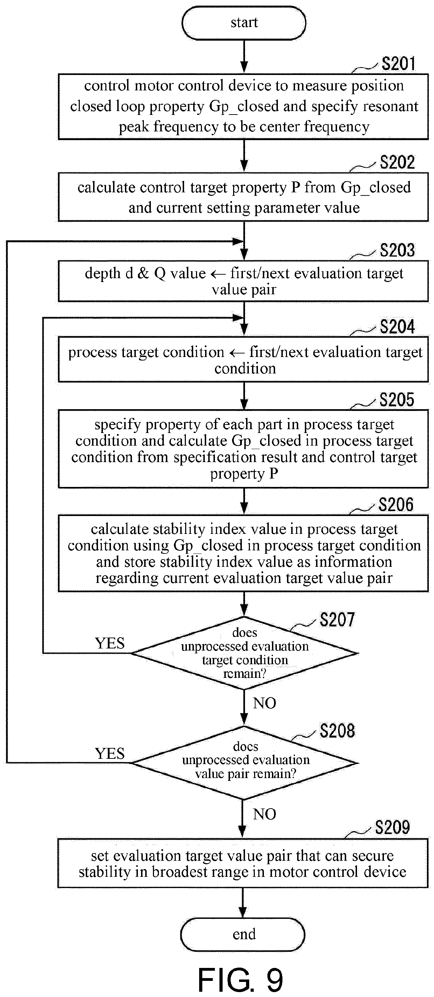

Fig. 9 illustrates a flow diagram of the second notch filter parameter calculation process.

As illustrated in the drawing, the arithmetic operation unit 14 that has started the second notch filter parameter calculation process controls the motor control device 30 to measure the position closed-loop property Gp_closed first (Step S201). The measurement process is the same as the process in Step S101 in the stability index value calculation process (Fig. 7). In addition, the arithmetic operation unit 14 also performs a process of specifying a frequency of a resonant peak that is defined as a recommended value for the center frequency of the notch filter from the position closed-loop property Gp_closed in Step S201.

Then, the arithmetic operation unit 14 performs the process of the same content as that in Step S102 in the stability index value calculation process in Step S202.

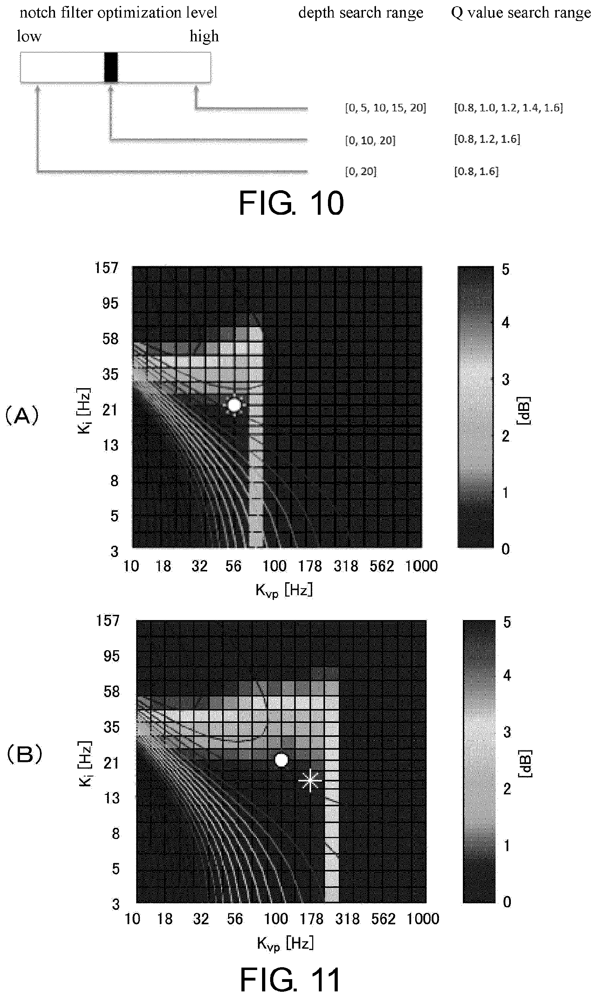

Thereafter, the arithmetic operation unit 14 stores that a combination of the depth d and the Q value of the notch filter evaluated in the process loop in Steps S204 to S207 executed this time is the first evaluation target value pair among a plurality of evaluation target value pairs (Step S203). Here, the plurality of evaluation target value pairs are information that defines details regarding the total number and each evaluation target value pair in an optimization level of the notch filter designated by the user. More specifically, the UI unit 15 according to the present embodiment causes the display control unit 16 to display an optimization level setting item (so-called slider control) illustrated in Fig. 10 on the screen of the display device 12. Then, in a case in which the highest level is designated as the optimization level, for example, the UI unit 15 provides a notification that a total of twenty five pairs of depths d and Q values, each of which is configured of one value among [0, 5, 10, 15, 20] and one value among [0.8, 1.0, 1.2, 1.4, 1.6] are "the plurality of evaluation target value pairs" to the arithmetic operation unit 14.

The arithmetic operation unit 14 that has ended the process in Step S203 (Fig. 9) starts the process loop in Steps S204 to S207. The process loop is the same as the process loop in Steps S103 to S107 in the stability index value calculation process (Fig. 7) other than that the process target condition set in Step S204 is a condition for setting parameters except for each parameter of the notch filter and that the stability index value in each process target condition is stored for each evaluation target value pair (Step S206).

The arithmetic operation unit 14 exits the process loop in Step S204 to S207 when there is no more unprocessed evaluation target condition (Step S207; NO). Then, in a case in which there remains an unprocessed evaluation target value pair (Step S208; YES), the arithmetic operation unit 14 returns to Step S203 to execute the process on the next evaluation target value pair.

In a case in which there is no more unprocessed evaluation target value pair (Step S208; NO), the arithmetic operation unit 14 specifies an evaluation target value pair that can secure stability in the broadest range, on the basis of the result of the process performed on each evaluation target value pair (Step S209). As the process, a process of specifying the evaluation target value pair according to which the stability index value satisfies a predetermined requirement in the broadest range in a case in which a contour map is displayed, for example.

Then, the arithmetic operation unit 14 sets the specified evaluation target value pair together with the center frequency specified in Step S201 in the motor control device 30 (Step S209) and then ends the second notch filter parameter calculation process.

According to the aforementioned second notch filter parameter calculation process, it is possible to widen the stable region of the servo system as illustrated in (A) and (B) of Fig. 11, for example. Note that (A) of Fig. 11 is a stability map of the servo system in a case in which the notch filter is turned off (the depth of the notch filter is "0") while (B) of Fig. 11 is a stability map of the servo system after completion of the second notch filter parameter calculation process.

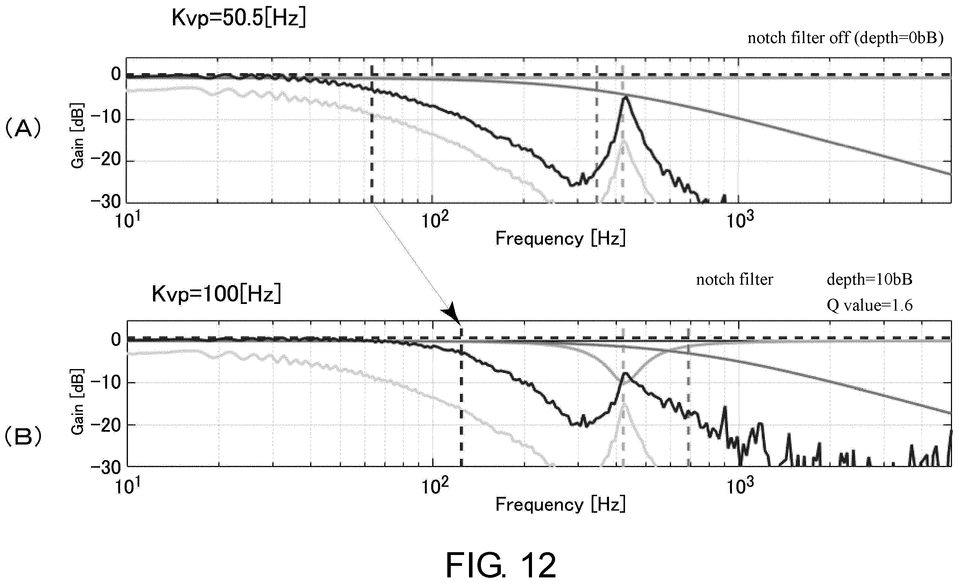

Since the recommended value calculation process of the aforementioned content is performed after the second notch filter parameter calculation process, it is possible to raise the control range as illustrated in (A) and (B) of Fig. 12 according to the setting assistance device 10 according to the present embodiment.

-Third notch filter parameter calculation process

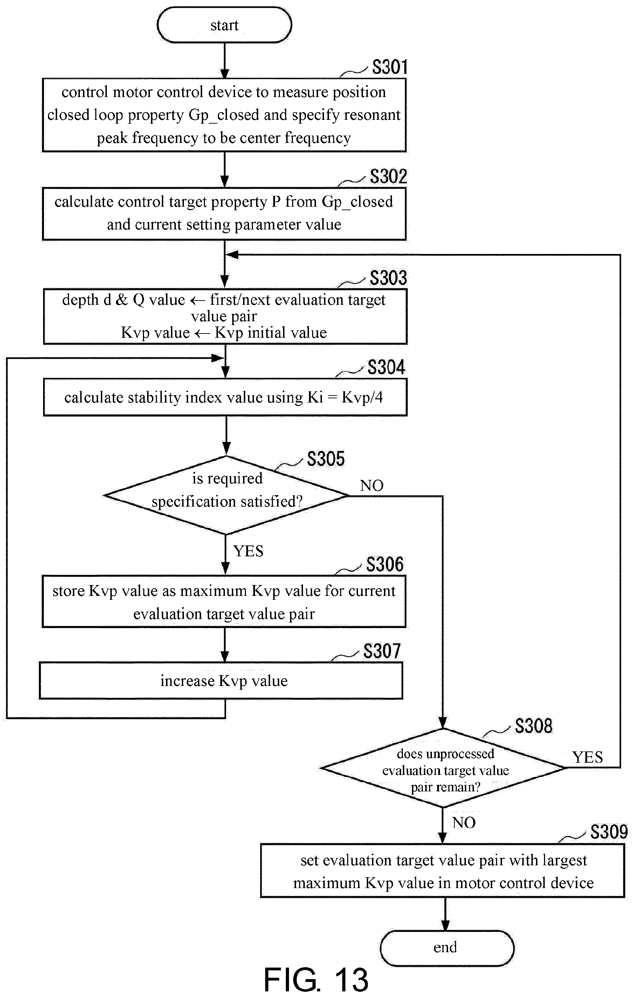

Fig. 13 is a flow diagram of the third notch filter parameter calculation process.

The third notch filter parameter calculation process is a process achieved by modifying the second notch filter parameter calculation process such that the recommended value for each parameter of the notch filter can be calculated at a higher speed.

As illustrated in the drawing, the arithmetic operation unit 14 that has started the third notch filter parameter calculation process performs the process that is the same as Steps S201 and S202 in the third notch filter parameter calculation process (Fig. 9) in Steps S301 and S302 first.

Then, the arithmetic operation unit 14 stores that the combination of the depth d and the Q value of the notch filter evaluated in the process loop in Steps S304 to S307 executed this time is the first evaluation target value pair among the plurality of evaluation target value pairs (Step S303). Also, in Step S303, the arithmetic operation unit 14 also stores that the Kvp value to be evaluated in the process loop in Steps S304 to S307 executed this time is an initial value (for example, 1 [Hz]) of Kvp.

The arithmetic operation unit 14 that has ended the process in Step S303 starts the process loop in Steps S304 to S307 and calculates the stability index value by defining $Ki = Kvp/4$ first (Step S304). More specifically, the arithmetic operation unit 14 obtains the position closed-loop property Gp_closed in the condition using the control target property P on the assumption that the motor control device 30 is in a condition that the center frequency of the notch filter is the frequency specified in Step S301, the combination of the depth d and the Q value of the notch filter is the current evaluation target pair, the Kvp value is the value set in Step S303 or S306, and the Ki value is 1/4 of the Kvp value. Then, the arithmetic operation unit 14 calculates the stability index value from obtained Gp_closed.

The arithmetic operation unit 14 that has ended the process in Step S304 determines whether or not the calculated stability index value satisfies the stability requirement specification (Step S305).

In a case in which the calculated stability index value satisfies the stability requirement specification (Step S305; YES), the arithmetic operation unit 14 stores the current Kvp value as the maximum Kvp value for the current evaluation target value pair (Step S306). Note that the process is a process of rewriting the current maximum Kvp value. Then, the arithmetic operation unit 14 performs the process of increasing the Kvp value by a predetermined amount (Step S307) and then restarts the process in and after Step S304.

Also, in a case in which the calculated stability index value does not satisfy the stability requirement specification (Step S305; NO) the arithmetic operation unit 14 determines whether or not there remains an unprocessed evaluation target value pair (Step S308). In a case in which there remains an unprocessed evaluation target value pair (Step S308; YES), then the arithmetic operation unit 14 returns to Step S303 to start the process on the next evaluation target value pair.

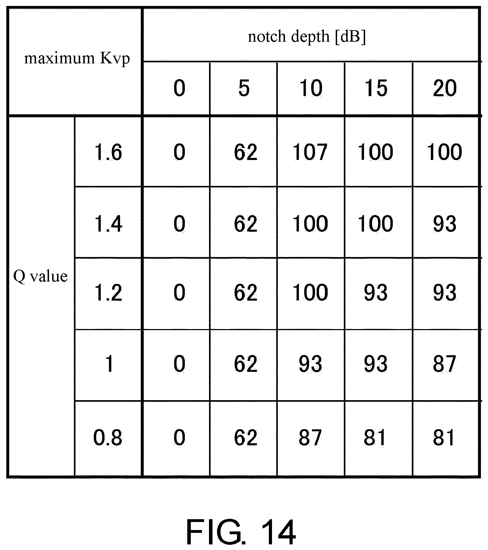

In a case in which there is no more unprocessed evaluation target value pair (Step S308; NO), the arithmetic operation unit 14 specifies the evaluation target value pair that leads to the largest maximum Kvp value on the basis of the maximum Kvp value for each evaluation target value pair (Step S309). In a case in which the maximum Kvp value obtained for each evaluation target value pair is the maximum Kvp value as illustrated in Fig. 14, for example, the arithmetic operation unit 14 specifies the evaluation target value pair (the notch depth "10" and the Q value "1.6") with the maximum Kvp value "107". Then, the arithmetic operation unit 14 sets the specified evaluation target value pair together with the center frequency specified in Step S301 in the motor control device 30 (Step S309) and then ends the third notch filter parameter calculation process.

The setting assistance device 10 (arithmetic operation unit 14) is configured to be able to perform a multi-axial parameter value setting assistance process as well in addition to the aforementioned various processes.

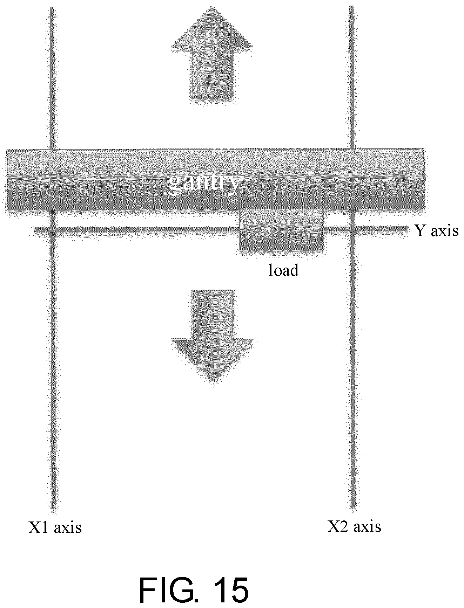

The multi-axial parameter value setting assistance process is a process for assisting setting of parameter values in a two-motor control device 30 that controls a plurality of axes (an X1 axis and an X2 axis) of the system that is caused to operate with the X1 axis and the X2 axis in a coordinated manner, as a gantry with the configuration illustrated in Fig. 15.

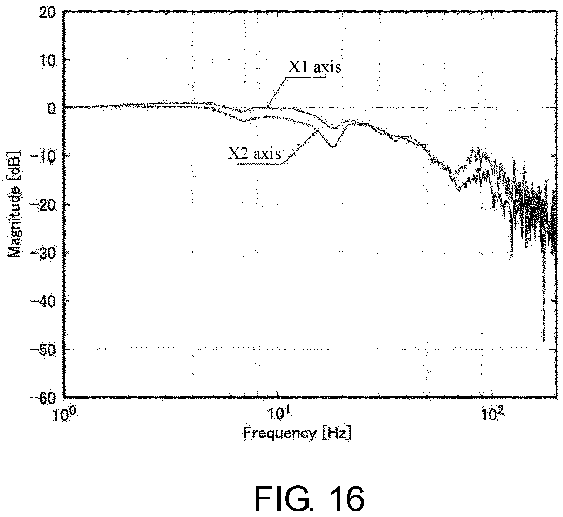

In the system as illustrated in Fig. 15, an unfavorable behavior such as yawing may occur if frequency properties of each axis are not the same. Therefore, although the same value is often set as a gain for each axis, frequency properties of each axis may change due to a mechanical structure, a gantry position, a load position, and the like. For example, the velocity closed-loop frequency property regarding the X1 axis and the velocity closed-loop frequency property regarding the X2 axis differ from each other as illustrated in Fig. 16 in a state in which a load is lean to the X2 axis.

Therefore, there may be a case in which control stability of both the axes cannot be secured if the same value is simply set as a gain for each axis.

In order to secure the control stability of both the axes, the stability index value calculation process (Fig. 7) using the position proportional gain Kpp and the velocity proportional gain Kvp as setting target parameters, for example, is performed on each of the motor control device 30 for controlling the X1 axis and the motor control device 30 for controlling the X2 axis in a state in which the load is lean to the X2 axis (or the X1 axis) first in the multi-axial parameter value setting assistance process.

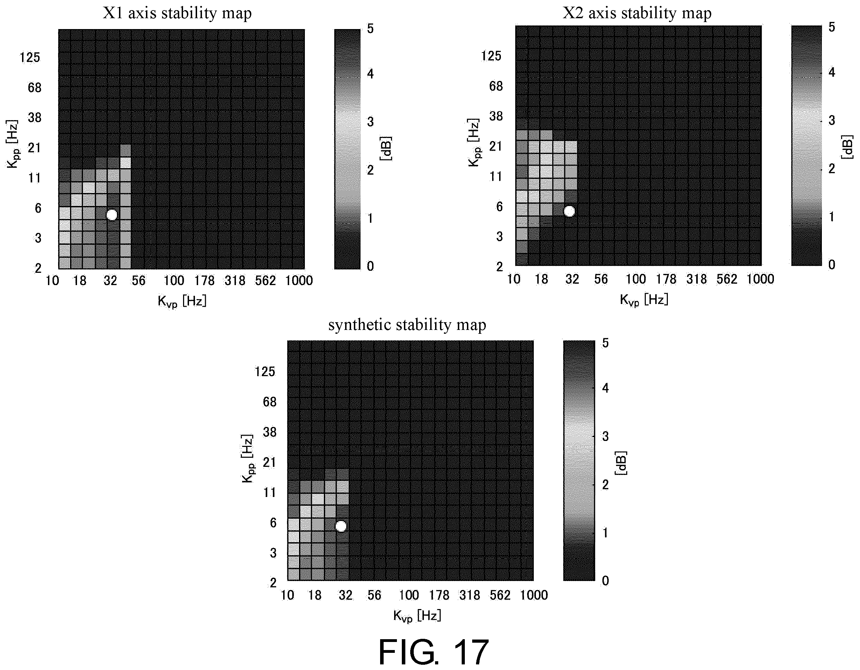

Then, a worst value specifying process of specifying the worst value of the stability index value in each condition is performed from the process result (the stability index value in each of the plurality of conditions) of the stability index value calculation process for the motor control device 30 for controlling the X1 axis and from the process result of the stability index value calculation process for the motor control device 30 for controlling the X2 axis. In other words, a process corresponding to a process of generating a synthetic stability map illustrated in Fig. 17 from the X1 axis stability map and the X2 axis stability map illustrated in the drawing is performed.

Thereafter, the control performance index value/recommended value calculation process is performed on the motor control device 30 for controlling the X1 axis or the X2 axis using the process result of the worst value specifying process (by handling each worst value obtained in the worst value specifying process as the stability index value). Then, after user's checking (or without user's checking), the two calculated recommended values are set in the motor control device 30 for controlling the X1 axis and the motor control device 30 for controlling the X2 axis, and the multi-axial parameter value setting assistance process ends.

As described above, the setting assistance device 10 according to the present embodiment can determine and output the recommended values for the two parameters in consideration of both the stability and the control performance. Therefore, the setting assistance device 10 enables even a user having insufficient knowledge regarding gain adjustment to set, in the motor control device 30, parameter values that can provide sufficient stability and control performance to the motor control device 30.

<<Modification examples>>

The aforementioned setting assistance device 10 can be modified in various manners. For example, the first to third notch filter parameter calculation processes may be modified to a process of presenting each of calculated recommended values to the user, allowing the user to check the recommended values, and then setting each of the recommended values in the motor control device 30. The second and third notch filter parameter calculation processes may be deformed to a process of calculating the recommended values for parameters of filters (a position filter and a torque filter) other than the notch filter. The setting assistance device 10 may be modified to a device that displays a three-dimensional graph as a stability map.

Also, as the trajectory following performance (or other performance) replacing property value, a value different from SQR (first parameter value$^2$ + $\alpha \cdot$second parameter value$^2$), for example, "first parameter value$^2$ + $k_1 \cdot$second parameter value$^2$" or | first parameter value | + $k_2 \cdot$ | first parameter value | ($k_1$ and $k_2$ are predefined values) may be used.

The setting assistance device 10 may be modified to a device that calculates (specifies) the recommended values for the first and second parameters from the first evaluation index value in each condition. As a procedure for calculating the two recommended values from the first evaluation index value in each condition, it is possible to exemplify a procedure of calculating, as the recommended values for the parameters, the first and second parameter values in the condition in which the first evaluation index value that is the closest to a desired value is obtained. Note that in a case in which a plurality of sets of such first and second parameter values are present, one set of parameter values to be defined as the recommended values may be selected from among the plurality of sets of parameter values on the basis of the first parameter values and/or the second parameter values. More specifically, a set of parameter values including the largest or smallest first parameter value or a set of a first parameter value and the second parameter value, from which the largest or smallest value (the aforementioned L value or the like) is obtained, may be retrieved from among the plurality of sets of parameter values, and the result of retrieval may be defined as the recommended values for the first and second parameters. Alternatively, a set of parameter value to be defined as the recommended values may be selected from among the aforementioned plurality of sets of parameter values using another algorithm (in a random manner, for example).

Similarly, the multi-axial parameter value setting assistance process may be modified to a process of calculating (specifying) the recommended values for the first and second parameters from the worst value in each condition. It is also possible to modify the setting assistance device to a device that calculates an evaluation index value indicating control performance as a first evaluation index value and calculates an evaluation index value indicating stability as a second evaluation index value. However, if the setting assistance device is modified in such a manner, it typically takes a longer time to obtain the recommended values, and it is thus preferable to employ the configuration in the aforementioned embodiment.

[Reference Signs List]

10    Setting assistance device
11    Input device
12    Display device
13    Main body portion
14    Arithmetic operation unit
15    UI unit
16    Display control unit
30    Motor control device
31    Position controller
32    Velocity controller
34    Current controller
35    Position detector
40    Control target
41    Motor
42    Load device

**Claims**

1.   A setting assistance device (10) that assists setting of parameter values in a motor control device (30) that controls a motor (41), the setting assistance device comprising:

an index value calculation unit (14) which is configured to calculate a first evaluation index value which indicates control performance or stability of motor control performed by the motor control device in each of a plurality of conditions in which a combination of values of a first parameter and a second parameter that are set in the motor control device is different, wherein two of a velocity proportional gain, an integral gain and a position proportional gain are used as the first parameter and the second parameter;
a recommended value calculation unit (14) which is configured to calculate, on the basis of the first evaluation index value and a second evaluation index value in each condition calculated by the index value calculation unit, a recommended value for the first parameter and a recommended value for the second parameter; and
a recommended value output unit (14) which is configured to output the recommended value for the first parameter and the recommended value for the second parameter calculated by the recommended value calculation unit as setting values for the first parameter and the second parameter to the motor control device (30), so as to set the parameter values, in the motor control device (30), wherein the parameter values can provide sufficient stability and control performance to the motor control device (30),
wherein the index value calculation unit (14) is configured to calculate the second evaluation index value of the motor control performed by the motor control device (30), in each of the plurality of conditions,
the setting assistance device (10) being **characterized in that**
the index value calculation unit (14) is configured to calculate, as the second evaluation index value in each condition, a value with a positive or negative correlation with each of the values of the first parameter and the second parameter in each condition.

2.   The setting assistance device (10) according to claim 1, wherein the index value calculation unit (14) is configured to calculate, as the first evaluation index value, a value indicating the stability of the motor control performed by the motor control device (30).

3. The setting assistance device (10) according to claim 1 or 2, wherein the index value calculation unit (14) is configured to calculate, as the second evaluation index value, a value indicating control performance of the motor control performed by the motor control device (30).

4. The setting assistance device (10) according to claim 3, wherein the recommended value calculation unit (14) is configured to specify a condition, which satisfies a requirement specification for the stability and a requirement specification for the control performance, and under which lowest performance is able to be realized, on the basis of the first evaluation index value and the second evaluation index value in each condition, and the recommended value calculation unit (14) is configured to calculate the values of the first parameter and the second parameter for the specified condition as the recommended value for the first parameter and the recommended value for the second parameter.

5. The setting assistance device (10) according to claim 1,

   wherein the index value calculation unit (14) is configured to also calculate a third evaluation index value that is an evaluation result obtained using an evaluation criterion different from an evaluation criterion of the first evaluation index value for the stability of the motor control performed by the motor control device (30) in each of the plurality of conditions, and
   the recommended value calculation unit (14) is configured to also use the third evaluation index value in each condition calculated by the index value calculation unit to calculate the recommended value for the first parameter and the recommended value for the second parameter.

6. The setting assistance device (10) according to claim 5,

   wherein the motor control device (30) includes a notch filter or a torque filter, and
   the index value calculation unit (14) is configured to calculate, as the first evaluation index value or the third evaluation index value, a gain at a frequency in accordance with a center frequency of the notch filter or a cutoff frequency of the torque filter of a servo system including the motor control device (30).

7. The setting assistance device (10) according to any one of claims 1 to 5,

   wherein the motor control device (30) includes a notch filter or a torque filter, and
   the setting assistance device (10) further comprises:
   a filter parameter recommended value output unit which is configure to respectively calculate, on the basis of a plurality of pieces of parameter setting information that designate values of one or more parameters that define a frequency property of the notch filter or the torque filter, the first evaluation index value in each of the plurality of conditions in a case in which the value designated by the parameter setting information is set as the values of the one or more parameters of the notch filter or the torque filter for each of the plurality of pieces of parameter setting information, determine whether or not each condition satisfies a requirement specification for the stability on the basis of the calculated first evaluation index value in each calculated condition, and outputs, as recommended values for the one or more parameters of the notch filter or the torque filter, the values of the one or more parameters designated by the parameter setting information with a broadest range of the conditions under which the requirement specification for the stability is determined to be satisfied.

8. The setting assistance device (10) according to claim 7, further comprising:
   a user interface unit that is configured to change the plurality of pieces parameter setting information that are targets of a process performed by the filter parameter recommended value output unit (14) in response to an instruction from a user.

9. The setting assistance device (10) according to any one of claims 1 to 5,

   wherein the motor control device (30) includes a notch filter, and
   the setting assistance device (10) further comprises:
   a recommended value determination unit which is configured to determine recommended values for one or more parameters that define a frequency property of the notch filter from a measurement result of a gain property of the motor control performed by the motor control device (30).

10. The setting assistance device (10) according to any one of claims 1 to 8, wherein the index value calculation unit (14) is configured to obtain a frequency transfer function of a predetermined portion including the motor (41) from a measurement result of a gain property of the motor control performed by the motor control device (30) and calculate the first evaluation index value in each of the plurality of conditions using the obtained frequency transfer function.

11. The setting assistance device (10) according to claim 1, wherein the index value calculation unit (14) is configured to obtain a frequency transfer function of a predetermined portion including the motor (41) from a measurement result of a gain property of the motor control performed by the motor control device (30) and calculate the first evaluation index value and the second evaluation index value in each of the plurality of conditions using the obtained frequency transfer function.

12. The setting assistance device (10) according to claim 11, wherein the index value calculation unit (14) is configured to calculate the second evaluation index value in each of the plurality of conditions from the frequency transfer function without performing an integration operation.

13. The setting assistance device (10) according to any one of claims 1 to 12, wherein the index value calculation unit (14) has a function of determining a value of at least one parameter other than the first parameter and the second parameter in each condition from the value of the first parameter or the second parameter.

14. The setting assistance device (10) according to claim 1, wherein the setting assistance device (10) is configured to assist setting of parameter values in a plurality of the motor control devices (30) used to synchronously control the motor (41) with two or more axes, and comprises:

specifying means (14) configured for specifying a worst value of the first evaluation index value calculated by the index value calculation unit for each condition;
the recommended value output unit (14) configured for determining and outputting a recommended value for the first parameter and a recommended value for the second parameter on the basis of the worst value in each condition specified by the specifying means.

15. The setting assistance device (10) according to claim 14, wherein the recommended value output unit (14) is configured to determine whether or not each of the conditions satisfies a requirement specification for the stability on the basis of a result of specifying the worst value in each condition, calculate a second evaluation index value of the motor control performed by the motor control device (30) in a trade-off relationship with the first evaluation index value in each condition that is determined to satisfy the requirement specification, and calculate the recommended value for the first parameter and the recommended value for the second parameter on the basis of the calculated second evaluation index value in each condition.

## Patentansprüche

1. Einstellungsassistenzvorrichtung (10), die das Einstellen von Parameterwerten in einer Motorsteuervorrichtung (30), die einen Motor (41) steuert, unterstützt, wobei die Einstellungsassistenzvorrichtung

eine Indexwertberechnungseinheit (14), die so eingerichtet ist, dass sie einen ersten Bewertungsindexwert, der die Steuerungsleistungsfähigkeit oder die Stabilität einer durch die Motorsteuervorrichtung durchgeführten Motorsteuerung bei einem jeden von mehreren Zuständen, in denen sich eine Kombination von Werten eines ersten Parameters und eines zweiten Parameters, die in der Motorsteuervorrichtung eingestellt sind, unterscheidet, angibt, wobei zwei aus einer Geschwindigkeitsproportionalverstärkung, einer integralen Verstärkung und einer Positionsproportionalverstärkung als der erste Parameter und der zweite Parameter verwendet werden;
eine Empfehlungswertberechnungseinheit (14), die so eingerichtet ist, dass sie auf der Basis des ersten Bewertungsindexwerts und eines zweiten Bewertungsindexwerts bei jedem Zustand, der durch die Indexwertberechnungseinheit berechnet wurde, einen empfohlenen Wert für den ersten Parameter und einen empfohlenen Wert für den zweiten Parameter berechnet; und
eine Empfehlungswertausgabeeinheit (14), die so eingerichtet ist, dass sie den empfohlenen Wert für den ersten Parameter und den empfohlenen Wert für den zweiten Parameter, die durch die Empfehlungswertberechnungseinheit berechnet wurden, als Einstellwerte für den ersten Parameter und den zweiten Parameter an die Motorsteuervorrichtung (30) ausgibt, um die Parameterwerte in der Motorsteuervorrichtung (30) einzustellen, wobei die Parameterwerte der Motorsteuervorrichtung (30) eine ausreichende Stabilität und Steuerungsleistungsfähigkeit bereitstellen können, wobei die Indexwertberechnungseinheit (14) so eingerichtet ist, dass sie den zweiten Bewertungsindexwert der Motorsteuerung, die durch die Motorsteuervorrichtung (30) durchgeführt wird, bei jedem der mehreren Zustände berechnet,

wobei die Einstellungsassistenzvorrichtung (10) **dadurch gekennzeichnet ist, dass**

die Indexwertberechnungseinheit (14) so eingerichtet ist, dass sie einen Wert mit einer positiven oder einer negativen Korrelation mit jedem der Werte des ersten Parameters und des zweiten Parameters bei jedem Zustand als den zweiten Bewertungsindexwert bei jedem Zustand berechnet.

2. Einstellungsassistenzvorrichtung (10) nach Anspruch 1, wobei die Indexwertberechnungseinheit (14) so eingerichtet ist, dass sie einen Wert, der die Stabilität der durch die Motorsteuervorrichtung (30) durchgeführten Motorsteuerung angibt als den ersten Bewertungsindexwert berechnet.

3. Einstellungsassistenzvorrichtung (10) nach Anspruch 1 oder 2, wobei die Indexwertberechnungseinheit (14) so eingerichtet ist, dass sie einen Wert, der die Steuerleistungsfähigkeit der durch die Motorsteuervorrichtung (30) durchgeführten Motorsteuerung angibt, als den zweiten Bewertungsindexwert berechnet.

4. Einstellungsassistenzvorrichtung (10) nach Anspruch 3, wobei die Empfehlungswertberechnungseinheit (14) so eingerichtet ist, dass sie auf der Basis des ersten Bewertungsindexwerts und des zweiten Bewertungsindexwerts bei jedem Zustand einen Zustand, der eine Anforderungsspezifikation für die Stabilität und eine Anforderungsspezifikation für die Steuerungsleistungsfähigkeit erfüllt und bei dem die niedrigste Leistungsfähigkeit umgesetzt werden kann, bestimmt, und die Empfehlungswertberechnungseinheit (14) so eingerichtet ist, dass sie die Werte des ersten Parameters und des zweiten Parameters für den bestimmten Zustand als den empfohlenen Wert für den ersten Parameter und den empfohlenen Wert für den zweiten Parameter berechnet.

5. Einstellungsassistenzvorrichtung (10) nach Anspruch 1,

wobei die Indexberechnungseinheit (14) so eingerichtet ist, dass sie auch einen dritten Bewertungsindexwert, der ein Bewertungsergebnis ist, das unter Verwendung eines Bewertungskriteriums, das sich von einem Bewertungskriterium des ersten Bewertungsindexwerts für die Stabilität der durch die Motorsteuervorrichtung (30) durchgeführten Motorsteuerung unterscheidet, erhalten wird, bei jedem der mehreren Zustände berechnet, und

die Empfehlungswertberechnungseinheit (14) so eingerichtet ist, dass sie auch den dritten Bewertungsindexwert bei jedem Zustand, der durch die Indexwertberechnungseinheit berechnet wurde, verwendet, um den empfohlenen Wert für den ersten Parameter und den empfohlenen Wert für den zweiten Parameter zu berechnen.

6. Einstellungsassistenzvorrichtung (10) nach Anspruch 5,

wobei die Motorsteuervorrichtung (30) ein Kerbfilter oder ein Drehmomentfilter aufweist, und

die Indexwertberechnungseinheit (14) so eingerichtet ist, dass sie eine Verstärkung bei einer Frequenz eines Servosystems, das die Motorsteuervorrichtung (30) aufweist, die einer Mittenfrequenz des Kerbfilters oder einer Cutoff-Frequenz des Drehmomentfilters entspricht, als den ersten Bewertungsindexwert oder den dritten Bewertungsindexwert berechnet.

7. Einstellungsassistenzvorrichtung (10) nach einem der Ansprüche 1 bis 5,

wobei die Motorsteuervorrichtung (30) ein Kerbfilter oder ein Drehmomentfilter aufweist, und die Einstellungsassistenzvorrichtung (10) ferner

eine Filterparameterempfehlungswertausgabeeinheit aufweist, die so eingerichtet ist, dass sie jeweils auf der Basis mehrerer Parametereinstellungsinformationselemente, die Werte eines oder mehrerer Parameter, die eine Frequenzeigenschaft des Kerbfilters oder des Drehmomentfilters definieren, bezeichnen, für jedes der mehreren Parametereinstellungsinformationselemente den ersten Bewertungsindexwert bei jedem der mehreren Zustände in einem Fall, in dem der durch die Parametereinstellungsinformation bezeichnete Wert als die Werte des einen oder der mehreren Parameter des Kerbfilters oder des Drehmomentfilters eingestellt wurden, berechnet, auf der Basis des berechneten ersten Bewertungsindexwerts bei jedem berechneten Zustand bestimmt, ob jeder Zustand eine Anforderungsspezifikation für die Stabilität erfüllt oder nicht, und die Werte des einen oder der mehreren Parameter, die durch die Parametereinstellungsinformation bezeichnet wurden, mit einem weitesten Bereich der Zustände, für die bestimmt wurde, dass die Anforderungsspezifikation für die Stabilität erfüllt wird, als empfohlene Werte für den einen oder die mehreren Parameter des Kerbfilters oder des Drehmomentfilters ausgibt.

8. Einstellungsassistenzvorrichtung (10) nach Anspruch 7, ferner aufweisend
eine Benutzerschnittstelleneinheit, die so eingerichtet ist, dass sie die mehreren Elemente von Parametereinstellungsinformationen, die Ziele eines durch die Filterparameterempfehlungswertausgebeeinheit (14) durchgeführten Prozesses sind, als Reaktion auf einen Befehl von einem Benutzer ändert.

9. Einstellungsassistenzvorrichtung (10) nach einem der Ansprüche 1 bis 5,

wobei die Motorsteuervorrichtung (30) ein Kerbfilter aufweist, und
die Einstellungsassistenzvorrichtung (10) ferner
eine Empfehlungswertbestimmungseinheit aufweist, die so eingerichtet ist, dass sie aus einem Messergebnis einer Verstärkungseigenschaft der durch die Motorsteuereinheit (30) durchgeführten Motorsteuerung empfohlene Werte für einen oder mehrere Parameter, die eine Frequenzeigenschaft des Kerbfilters definieren, bestimmt.

10. Einstellungsassistenzvorrichtung (10) nach einem der Ansprüche 1 bis 8, wobei die Indexwertberechnungseinheit (14) so eingerichtet ist, dass sie aus einem Messergebnis einer Verstärkungseigenschaft der durch die Motorsteuereinheit (30) durchgeführten Motorsteuerung eine Frequenzübertragungsfunktion eines vorherbestimmten Abschnitts, der den Motor (41) enthält, erhält und den ersten Bewertungsindexwert bei jedem der mehreren Zustände unter Verwendung der erhaltenen Frequenzübertragungsfunktion berechnet.

11. Einstellungsassistenzvorrichtung (10) nach Anspruch 1, wobei die Indexwertberechnungseinheit (14) so eingerichtet ist, dass sie aus einem Messergebnis einer Verstärkungseigenschaft der durch die Motorsteuereinheit (30) durchgeführten Motorsteuerung eine Frequenzübertragungsfunktion eines vorherbestimmten Abschnitts, der den Motor (41) enthält, erhält und den ersten Bewertungsindexwert und den zweiten Bewertungsindexwert bei jedem der mehreren Zustände unter Verwendung der erhaltenen Frequenzübertragungsfunktion berechnet.

12. Einstellungsassistenzvorrichtung (10) nach Anspruch 11, wobei die Indexwertberechnungseinheit (14) so eingerichtet ist, dass sie den zweiten Bewertungsindexwert bei jedem der mehreren Zustände aus der Frequenzübertragungsfunktion berechnet, ohne eine Integrationsoperation durchzuführen.

13. Einstellungsassistenzvorrichtung (10) nach einem der Ansprüche 1 bis 12, wobei die Indexwertberechnungseinheit (14) eine Funktion zum Bestimmen eines Werts wenigstens eines anderen Parameters als dem ersten Parameter und dem zweiten Parameter bei jedem Zustand aus dem Wert des ersten Parameters oder des zweiten Parameters aufweist.

14. Einstellungsassistenzvorrichtung (10) nach Anspruch 1, wobei die Einstellungsassistenzvorrichtung (10) so eingerichtet ist, dass sie das Einstellen von Parameterwerten bei mehreren Motorsteuervorrichtungen (30), die verwendet werden, um den Motor (41) mit zwei oder mehr Achsen synchron zu steuern, unterstützt und

ein Bestimmungsmittel (14), das so eingerichtet ist, dass es einen schlechtesten Wert des ersten Bewertungsindexwerts, der durch die Indexwertberechnungseinheit für jeden Zustand berechnet wurde, bestimmt, und;
die Empfehlungswertausgabeeinheit (14), die so eingerichtet ist, dass sie auf der Basis des schlechtesten Werts bei jedem Zustand, der durch das Bestimmungsmittel bestimmt wurde, einen empfohlenen Wert für den ersten Parameter und einen empfohlenen Wert für den zweiten Parameter ausgibt.

15. Einstellungsassistenzvorrichtung (10) nach Anspruch 14,

wobei die Empfehlungswertausgabeeinheit (14) so eingerichtet ist, dass sie auf der Basis eines Ergebnisses des Bestimmens des schlechtesten Werts bei jeden Zustand bestimmt, ob jeder der Zustände eine Anforderungsspezifikation für die Stabilität erfüllt,
bei jedem Zustand, für den bestimmt wurde, dass er die Anforderungsspezifikation erfüllt, einen zweiten Bewertungsindexwert der durch die Motorsteuervorrichtung (30) durchgeführten Motorsteuerung in einer Kompromissbeziehung mit dem ersten Bewertungsindexwert berechnet, und auf der Basis des berechneten zweiten Bewertungsindexwerts bei jedem Zustand den empfohlenen Wert für den ersten Parameter und den empfohlenen Wert für den zweiten Parameter berechnet.

**Revendications**

1.  Dispositif d'aide au réglage (10) qui aide au réglage de valeurs de paramètres dans un dispositif de commande de moteur (30) qui commande un moteur (41), le dispositif d'aide au réglage comprenant :

    une unité de calcul de valeurs d'indice (14) qui est configurée pour calculer une première valeur d'indice d'évaluation qui indique une performance de commande ou une stabilité de commande de moteur réalisée par le dispositif de commande de moteur dans chacune d'un pluralité d'états dans lesquels une combinaison de valeurs d'un premier paramètre et d'un deuxième paramètre qui sont réglés dans le dispositif de commande de moteur est différente, dans lequel deux parmi un gain proportionnel de vitesse, un gain intégral et un gain proportionnel de position sont utilisés en tant que le premier paramètre et le deuxième paramètre ;
    une unité de calcul de valeurs recommandées (14) qui est configurée pour calculer, sur la base de la première valeur d'indice d'évaluation et d'une deuxième valeur d'indice d'évaluation dans chaque état calculées par l'unité de calcul de valeurs d'indice, une valeur recommandée pour le premier paramètre et une valeur recommandée pour le deuxième paramètre ; et
    une unité de sortie de valeurs recommandées (14) qui est configurée pour délivrer la valeur recommandée pour le premier paramètre et la valeur recommandée pour le deuxième paramètre calculées par l'unité de calcul de valeurs recommandées en tant que valeurs de réglage pour le premier paramètre et le deuxième paramètre au dispositif de commande de moteur (30), de manière à régler les valeurs de paramètres dans le dispositif de commande de moteur (30), dans lequel les valeurs de paramètres peuvent fournir une stabilité et une performance de commande suffisantes au dispositif de commande de moteur (30),
    dans lequel l'unité de calcul de valeurs d'indice (14) est configurée pour calculer la deuxième valeur d'indice d'évaluation de la commande de moteur réalisée par le dispositif de commande de moteur (30) dans chacun de la pluralité d'états,
    le dispositif d'aide au réglage (10) étant **caractérisé en ce que**
    l'unité de calcul de valeurs d'indice (14) est configurée pour calculer, en tant que la deuxième valeur d'indice d'évaluation dans chaque état, une valeur avec une corrélation positive ou négative avec chacune des valeurs du premier paramètre et du deuxième paramètre dans chaque état.

2.  Dispositif d'aide au réglage (10) selon la revendication 1, dans lequel l'unité de calcul de valeurs d'indice (14) est configurée pour calculer, en tant que la première valeur d'indice d'évaluation, une valeur indiquant la stabilité de la commande de moteur réalisée par le dispositif de commande de moteur (30).

3.  Dispositif d'aide au réglage (10) selon la revendication 1 ou 2, dans lequel l'unité de calcul de valeurs d'indice (14) est configurée pour calculer, en tant que la deuxième valeur d'indice d'évaluation, une valeur indiquant une performance de commande de la commande de moteur réalisée par le dispositif de commande de moteur (30).

4.  Dispositif d'aide au réglage (10) selon la revendication 3, dans lequel l'unité de calcul de valeurs recommandées (14) est configurée pour spécifier un état, qui remplit une spécification d'exigence pour la stabilité et une spécification d'exigence pour la performance de commande, et dans lequel une performance la plus basse peut être réalisée, sur la base de la première valeur d'indice d'évaluation et de la deuxième valeur d'indice d'évaluation dans chaque état, et l'unité de calcul de valeurs recommandées (14) est configurée pour calculer les valeurs du premier paramètre et du deuxième paramètre pour l'état spécifié en tant que la valeur recommandée pour le premier paramètre et la valeur recommandée pour le deuxième paramètre.

5.  Dispositif d'aide au réglage (10) selon la revendication 1,

    dans lequel l'unité de calcul de valeurs d'indice (14) est configurée pour calculer également une troisième valeur d'indice d'évaluation qui est un résultat d'évaluation obtenu à l'aide d'un critère d'évaluation différent d'un critère d'évaluation de la première valeur d'indice d'évaluation pour la stabilité de la commande de moteur réalisée par le dispositif de commande de moteur (30) dans chacun de la pluralité d'états, et
    l'unité de calcul de valeurs recommandées (14) est configurée pour utiliser également la troisième valeur d'indice d'évaluation dans chaque état calculée par l'unité de calcul de valeurs d'indice pour calculer la valeur recommandée pour le premier paramètre et la valeur recommandée pour le deuxième paramètre.

6.  Dispositif d'aide au réglage (10) selon la revendication 5,

    dans lequel le dispositif de commande de moteur (30) inclut un filtre coupe-bande ou un filtre de couple, et

l'unité de calcul de valeurs d'indice (14) est configurée pour calculer, en tant que la première valeur d'indice d'évaluation ou la troisième valeur d'indice d'évaluation, un gain à une fréquence en fonction d'une fréquence centrale du filtre coupe-bande ou d'une fréquence de coupure du filtre de couple d'un système servo incluant le dispositif de commande de moteur (30).

**7.** Dispositif d'aide au réglage (10) selon l'une quelconque des revendications 1 à 5,
dans lequel le dispositif de commande de moteur (30) inclut un filtre coupe-bande ou un filtre de couple, et le dispositif d'aide au réglage (10) comprend en outre :
une unité de sortie de valeurs recommandées de paramètres de filtre qui est configurée pour respectivement calculer, sur la base d'une pluralité d'éléments d'informations de réglage de paramètres qui désignent des valeurs d'un ou plusieurs paramètres qui définissent une propriété de fréquence du filtre coupe-bande ou du filtre de couple, la première valeur d'indice d'évaluation dans chacun de la pluralité d'états dans un cas dans lequel la valeur désignée par les informations de réglage de paramètres est réglée en tant que les valeurs des un ou plusieurs paramètres du filtre coupe-bande ou du filtre de couple pour chacun de la pluralité d'éléments d'informations de réglage de paramètres, déterminer si chaque état remplit ou non une spécification d'exigence pour la stabilité sur la base de la première valeur d'indice d'évaluation calculée dans chaque état calculé, et délivrer, en tant que valeurs recommandées pour les un ou plusieurs paramètres du filtre coupe-bande ou du filtre de couple, les valeurs des un ou plusieurs paramètres désignés par les informations de réglage de paramètres avec une plage la plus large des états dans lesquels la spécification d'exigence pour la stabilité est déterminée comme étant remplie.

**8.** Dispositif d'aide au réglage (10) selon la revendication 7, comprenant en outre :
une unité d'interface utilisateur qui est configurée pour changer la pluralité d'éléments d'informations de réglage de paramètres qui sont des cibles d'un traitement réalisé par l'unité de sortie de valeurs recommandées de paramètres de filtre (14) en réponse à une instruction d'un utilisateur.

**9.** Dispositif d'aide au réglage (10) selon l'une quelconque des revendications 1 à 5,

dans lequel le dispositif de commande de moteur (30) inclut un filtre coupe-bande, et
le dispositif d'aide au réglage (10) comprend en outre :
une unité de détermination de valeurs recommandées qui est configurée pour déterminer des valeurs recommandées pour un ou plusieurs paramètres qui définissent une propriété de fréquence du filtre coupe-bande à partir d'un résultat de mesure d'une propriété de gain de la commande de moteur réalisée par le dispositif de commande de moteur (30).

**10.** Dispositif d'aide au réglage (10) selon l'une quelconque des revendications 1 à 8, dans lequel l'unité de calcul de valeurs d'indice (14) est configurée pour obtenir une fonction de transfert de fréquence d'une partie prédéterminée incluant le moteur (41) à partir d'un résultat de mesure d'une propriété de gain de la commande de moteur réalisée par le dispositif de commande de moteur (30) et calculer la première valeur d'indice d'évaluation dans chacun de la pluralité d'états à l'aide de la fonction de transfert de fréquence obtenue.

**11.** Dispositif d'aide au réglage (10) selon la revendication 1, dans lequel l'unité de calcul de valeurs d'indice (14) est configurée pour obtenir une fonction de transfert de fréquence d'une partie prédéterminée incluant le moteur (41) à partir d'un résultat de mesure d'une propriété de gain de la commande de moteur réalisée par le dispositif de commande de moteur (30) et calculer la première valeur d'indice d'évaluation et la deuxième valeur d'indice d'évaluation dans chacun de la pluralité d'états à l'aide de la fonction de transfert de fréquence obtenue.

**12.** Dispositif d'aide au réglage (10) selon la revendication 11, dans lequel l'unité de calcul de valeurs d'indice (14) est configurée pour calculer la deuxième valeur d'indice d'évaluation dans chacun de la pluralité d'états à partir de la fonction de transfert de fréquence sans réaliser d'opération d'intégration.

**13.** Dispositif d'aide au réglage (10) selon l'une quelconque des revendications 1 à 12, dans lequel l'unité de calcul de valeurs d'indice (14) comporte une fonction de détermination d'une valeur d'au moins un paramètre autre que le premier paramètre et le deuxième paramètre dans chaque état à partir de la valeur du premier paramètre ou du deuxième paramètre.

**14.** Dispositif d'aide au réglage (10) selon la revendication 1, dans lequel l'unité d'aide au réglage (10) est configurée pour aider au réglage de valeurs de paramètres dans une pluralité de dispositifs de commande de moteur (30) utilisés pour commander de manière synchrone le moteur (41) avec deux axes ou plus, et comprend :

des moyens de spécification (14) configurés pour spécifier la pire valeur de la première valeur d'indice d'évaluation calculée par l'unité de calcul de valeurs d'indice pour chaque état ;

l'unité de sortie de valeurs recommandées (14) étant configurée pour déterminer et délivrer une valeur recommandée pour le premier paramètre et une valeur recommandée pour le deuxième paramètre sur la base de la pire valeur dans chaque état spécifié par les moyens de spécification.

15. Dispositif d'aide au réglage (10) selon la revendication 14,
dans lequel l'unité de sortie de valeurs recommandées (14) est configurée pour déterminer si chacun des états remplit ou non une spécification d'exigence pour la stabilité sur la base d'un résultat de la spécification de la pire valeur dans chaque état, calculer une deuxième valeur d'indice d'évaluation de la commande de moteur réalisée par le dispositif de commande de moteur (30) dans une relation de compromis avec la première valeur d'indice d'évaluation dans chaque état qui est déterminée comme remplissant la spécification d'exigence, et calculer la valeur recommandée pour le premier paramètre et la valeur recommandée pour le deuxième paramètre sur la base de la deuxième valeur d'indice d'évaluation calculée dans chaque état.

《servo system》

**40**

**10**

**30**

《control target》

| setting assistance device | | motor control device | | motor | ~**41** |

load device ~**42**

# FIG. 1

FIG. 2

FIG. 3

FIG. 4

FIG. 5

FIG. 6

start

~ S101

control motor control device to measure position closed-loop
property Gp_closed

~ S102

calculate control target property P from Gp_closed and current
setting parameter value

~ S103

process target condition ← first/next evaluation target condition

~ S104

specify property of each part in process target condition and
calculate Gp_closed in process target condition from specification
result and control target property P

~ S105

calculate stability index value in process target condition using
Gp_closed in process target condition and store stability index
value

~ S106

YES    does unprocessed evaluation
target condition remain?

NO

end

# FIG. 7

FIG. 8

start

$\sim$ S201

control motor control device to measure position
closed loop property Gp_closed and specify resonant
peak frequency to be center frequency

$\sim$ S202

calculate control target property P from Gp_closed
and current setting parameter value

$\sim$ S203

depth d & Q value ← first/next evaluation target
value pair

$\sim$ S204

process target condition ← first/next evaluation target
condition

$\sim$ S205

specify property of each part in process target
condition and calculate Gp_closed in process target
condition from specification result and control target
property P

$\sim$ S206

calculate stability index value in process target
condition using Gp_closed in process target condition
and store stability index value as information
regarding current evaluation target value pair

$\sim$ S207

YES ← does
unprocessed evaluation
target condition
remain?

NO

$\sim$ S208

YES ← does
unprocessed evaluation
value pair remain?

NO

$\sim$ S209

set evaluation target value pair that can secure
stability in broadest range in motor control device

end

# FIG. 9

notch filter optimization level          depth search range          Q value search range

low                                          high

[0, 5, 10, 15, 20]          [0.8, 1.0, 1.2, 1.4, 1.6]

[0, 10, 20]          [0.8, 1.2, 1.6]

[0, 20]          [0.8, 1.6]

## FIG. 10

(A)

(B)

## FIG. 11

FIG. 12

EP 3 843 262 B1

start

S301
control motor control device to measure position
closed loop property Gp_closed and specify resonant
peak frequency to be center frequency

S302
calculate control target property P from Gp_closed
and current setting parameter value

S303
depth d & Q value ← first/next evaluation target
value pair
Kvp value ← Kvp initial value

S304
calculate stability index value using Ki = Kvp/4

S305
is required
specification satisfied? — NO

YES

S306
store Kvp value as maximum Kvp value for current
evaluation target value pair

S307
increase Kvp value

S308
does unprocessed
evaluation target value
pair remain? — YES

NO

S309
set evaluation target value pair with largest
maximum Kvp value in motor control device

end

## FIG. 13

| maximum Kvp | | notch depth [dB] | | | | |
|---|---|---|---|---|---|---|
| | | 0 | 5 | 10 | 15 | 20 |
| Q value | 1.6 | 0 | 62 | 107 | 100 | 100 |
| | 1.4 | 0 | 62 | 100 | 100 | 93 |
| | 1.2 | 0 | 62 | 100 | 93 | 93 |
| | 1 | 0 | 62 | 93 | 93 | 87 |
| | 0.8 | 0 | 62 | 87 | 81 | 81 |

# FIG. 14

FIG. 15

FIG. 16

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007034781 A
- JP 2011244668 A
- JP 2017167607 A